# EUROPEAN PATENT APPLICATION

(11) **EP 1 189 226 A2**
(43) Date of publication of application: **20.03.2002**
(21) Application number: 01307965.2
(22) Date of filing: 19.09.2001
(51) Int. Cl.: G11B 21/24, G11B 7/08

(54) **Disc drive having an adjusting mechanism capable of easily and precisely adjusting a fixing position of a motor-chassis assembly**

(30) Priority: 19.09.2000 JP 2000283841; 22.09.2000 JP 2000287990
(71) Applicant: Mitsumi Electric Co., Ltd., Chofu-shi, Tokyo (JP)
(72) Inventor: Hori, Ken'ichi, c/o Mitsumi Electric Co., Ltd., Atsugi-shi, Tokyo (JP); Yamada, Tsukasa, c/o Mitsumi Electric Co., Ltd., Atsugi-shi, Tokyo (JP)
(74) Representative: Moir, Michael Christopher

(57) **Abstract**

A disc drive (10) is provided with a sled chassis (21) and a motor-chassis assembly fixed to the sled chassis (21). The motor-chassis assembly is provided with a motor chassis (22) on which a turntable (24) and a spindle motor (23) are supported to rotate an optical disc. The motor-chassis assembly is fixed to the sled chassis (21) by fixing means (41, 42, 43, 61, 62, 63 or 41', 42', 43', 61', 62', 63'). The fixing means is designed so that the positional relationship therebetween is adjustable. As a consequence, the optical disc and an optical pickup (27) can also be adjusted in relative position. It is preferable that the positional relationship is adjusted in a height direction or in an off-center direction (E-F).

## Description

### Background of the Invention:

This invention relates to a removable disc drive for a CD-ROM or the like and, more particularly, to a thin-type disc drive incorporated in small terminal equipment such as a notebook-type personal computer.

Generally, a disc drive has a structure in which a turntable for rotating an optical disc such as a CD-ROM (Compact Disc-Read Only Memory), a spindle motor for driving the turntable, an optical pickup, a pickup position control unit for controlling the position of the optical pickup in a radial direction of the optical disc, and so on are incorporated in or mounted on a sled chassis.

Recently, the technical trend of such a disc drive is directed to an achievement of a greater capacity and a higher speed. Following such trend, the disc drive is required to have high accuracy both in mechanical and physical aspects. In other words, it is desired that the above-mentioned components are arranged exactly as designed. In particular, a positional relationship between the optical disc and the optical pickup is important in data recording and reproducing operations.

Practically, however, it is difficult to satisfy such a demand for high accuracy and yet to manufacture a large amount of products. Therefore, it is a general practice to provide an adjusting mechanism for adjusting a variation in each individual product after it is manufactured, thereby achieving high accuracy.

Existing techniques of the type are disclosed, for example, in Japanese Unexamined Patent Publications Nos. H10-64207 (hereinafter referred to as a first conventional technique) and 2000-20962 (hereinafter referred to as a second conventional technique). In each of the first and the second conventional techniques, an adjusting mechanism for adjusting an optical axis of the optical pickup is provided taking into account the above-mentioned importance of the positional relationship between the optical disc and the optical pickup. Specifically, the adjusting mechanism adjusts the inclination of the optical pickup by adjusting the heights or levels of both ends of a shaft or a guide shaft arranged in the pickup position control unit.

In the demand for mechanical high accuracy, the positional relationship between the optical disc and the optical pickup is particularly important as described above. This positional relationship is of a relative nature in which the position of one of the optical disc and the optical pickup is observed with respect to the position of the other as a reference position.

In the past, no consideration has been made about the adjustment of relative positions between the spindle motor and the sled chassis upon adjustment of the above-mentioned positional relationship. This means that the position of the optical disc driven and rotated by the spindle motor is fixed and constant. Thus, in the past, the position of the optical pickup is adjusted with reference to the constant position of the optical disc as disclosed in the first and the second conventional techniques.

However, the first and the second conventional techniques mentioned above are disadvantageous in that the adjusting mechanism is large in scale. Therefore, it is difficult to satisfy the demand for reduction in size and thickness of the disc drive. In addition, the adjusting mechanism requires a large number of components.

### Summary of the Invention:

It is an object of the preferred embodiments of this invention to provide a disc drive capable of satisfying both a demand for high accuracy and a demand for reduction in size and thickness by enabling the adjustment of a fixing position and a height or level of an assembly upon adjusting relative positions of components.

Other objects of the invention will become clear as the description proceeds.

According to this invention, there is provided a disc drive comprising a motor-chassis assembly in which a turntable and a spindle motor are held on a motor chassis to rotate a disc a sled chassis, and fixing means fixing said motor-chassis assembly to said sled chassis, characterized in that said fixing means is designed so that the positional relationship between the assembly and the sled chassis is adjustable.

### Brief Description of the Drawings:

Preferred features of the present invention will now be described, by way of example only, with reference to the accompanying drawings, in which:-
Figs. 1A, 1B and 1C are a top plan view, a left-side view, and a right-side view of a disc drive according to a first embodiment of this invention, in a state where a tray is pulled out therefrom;
Fig. 2 is a top plan view showing a driving unit in the disc drive illustrated in Fig. 1A;
Fig. 3 is a bottom plan view corresponding to Fig. 2;
Fig. 4 is a top plan view of the driving unit illustrated in Fig. 2, in a state where an upper plate is removed therefrom;
Fig. 5 is an enlarged bottom plan view of a motor chassis illustrated in Fig. 3;
Fig. 6 is a bottom plan view of a portion of a sled chassis corresponding to the motor chassis illustrated in Fig. 5;
Fig. 7 is a sectional view taken along a line VII-VII in Fig. 6;
Fig. 8 is a sectional view taken along a line VIII-VIII in Fig. 6;
Fig. 9A is a plan view of a spacer attached to an angle adjusting boss illustrated in Fig. 6;
Fig. 9B is a sectional view taken along a line IX-IX in Fig. 9A, respectively;
Fig. 10 is a sectional view for describing adjustment of a mounting plane of the motor chassis by the spacer illustrated in Figs. 9A and 9B;
Fig. 11 is a bottom plan view of a disc drive according to a second embodiment of this invention;
Fig. 12 is an enlarged bottom plan view of a motor-chassis assembly comprising a motor chassis and a spindle motor illustrated in Fig. 11;
Fig. 13 is a bottom plan view of a portion of a sled chassis corresponding to the motor-chassis assembly illustrated in Fig. 12;
Fig. 14 is a sectional view taken along a line XIV-XIV in Fig. 12;
Figs. 15A and 15B are a front view and a side view of an eccentric driver;
Fig. 16 is a view for describing an adjusting mechanism driven by the eccentric driver illustrated in Figs. 15A and 15B; and
Fig. 17 is a view showing the adjusting mechanism illustrated in Fig. 16 in an operated state.

### Description of the Preferred Embodiment:

Now, description will be made of this invention with reference to the drawing.

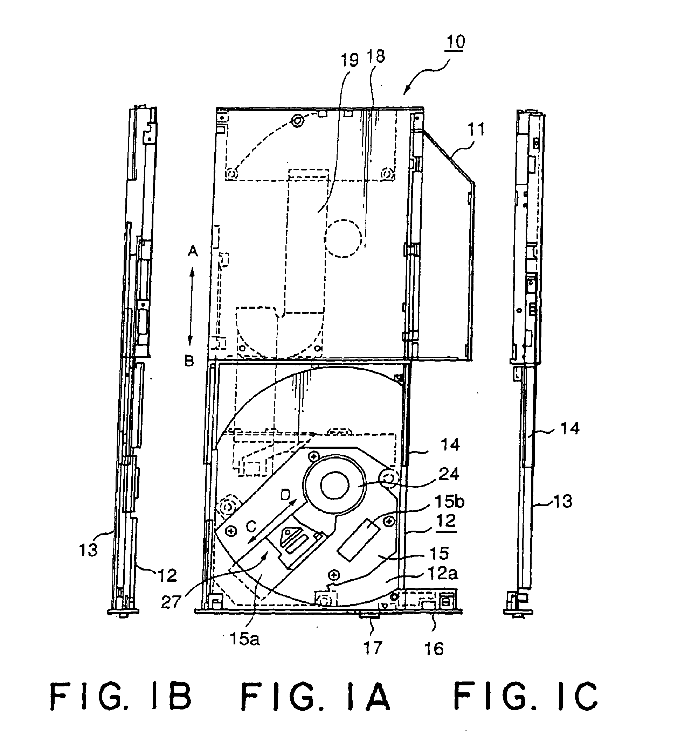

At first referring to Figs. 1A, 1B, and 1C, a disc drive 10 according to a first embodiment of this invention is a CD-ROM drive to be mounted in a casing of a notebook-type personal computer (not shown).

In addition, the illustrated disc drive 10 is a disc drive of a so-called tray incorporated type in which a reproducing mechanism such as an optical pickup and a disc driving mechanism such as a spindle motor and a turntable are incorporated into a tray 12 in the manner which will later be described in detail.

In Fig. 1A, bottom, top, left, and right sides of the drawing sheet correspond to front, back, left, and right sides of the disc drive 10 mentioned in the following description. In Fig. 1 B, right and left sides of the drawing sheet correspond to upper and lower sides of the disc drive 10. In Fig. 1C, left and right sides of the drawing sheet correspond to upper and lower sides of the disc drive 10.

The disc drive 10 comprises the above-mentioned tray 12 for receiving a disc (CD-ROM) (not shown), a main chassis (outer case) 11 adapted to receive the tray 12 together with the disc, a lower plate 13 attached to a lower surface of the tray 12, and a tray sliding mechanism 14 for slidably supporting the tray 12 back and forth (i.e., in a direction depicted by double-headed arrow A-B in Fig. 1A).

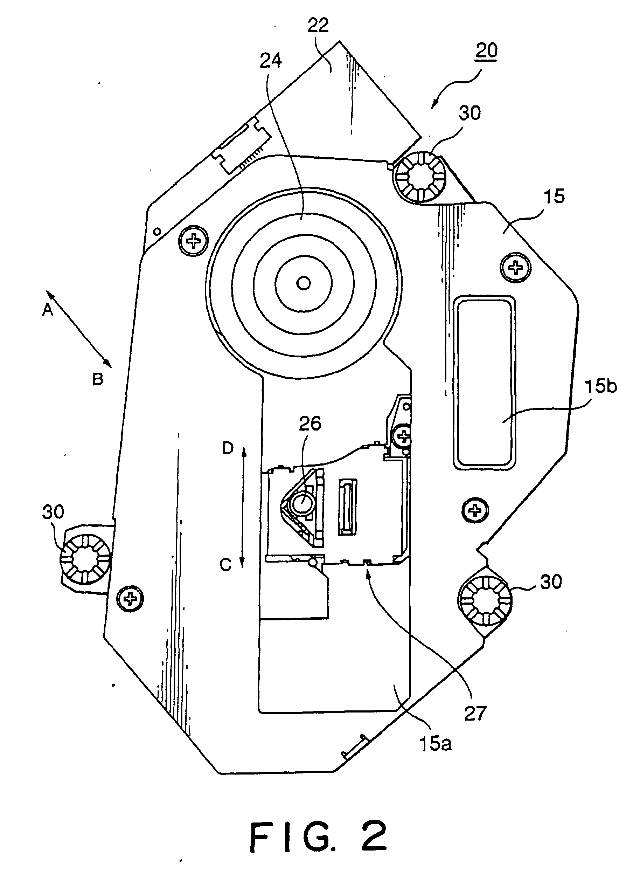

The lower plate 13 receives a part of a flexible board 19, another flexible board, and a printed board connected thereto on the lower side of the tray 12. The lower plate 13 serves to hold a driving unit 20 (which will later be described in conjunction with Fig. 2 and so on) to the tray 12 from the lower side of the tray 12.

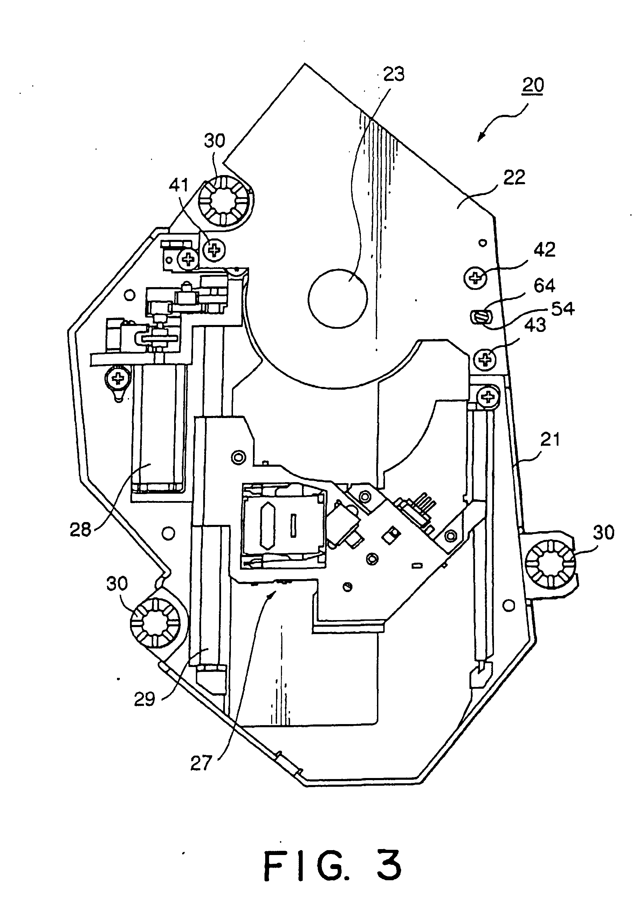

As illustrated in Figs. 1A and 1 B, the tray 12 has a disc-facing surface 12a to face an optical disc (not shown) of a circular shape. The disc-facing surface 12a defines a space for receiving the optical disc. The tray 12, in particular, the disc-facing surface 12a has a width smaller than the diameter of the optical disc. Therefore, in the state where the optical disc such as a CD-ROM is received on the disc-facing surface 12a, a part of the optical disc extends outward beyond a right side of the tray 12. In the disc-facing surface 12a, an upper plate 15 is attached to cover the driving unit 20 (Fig. 2 and so on) which will later be described. The upper plate 15 is provided with an opening 15a allowing an optical pickup 27 and a turntable 24 to be partially exposed and a protrusion 15b for a stepping motor 28 (see Fig. 3).

The tray 12 has a front end to which a front bezel (front panel) 16 is attached and fixed. The front bezel 16 is slidingly movable together with the tray 12 back and forth in the direction depicted by the double-headed arrow A-B in Fig. 1A. The front bezel 16 is provided with a switch button 17 formed at a position slightly shifted rightward from its center. When the switch button 17 is pressed in the state where the tray 12 is received in the main chassis 11, the tray 12 can be pulled out.

The main chassis 11 has a rear portion (back portion) provided with a circuit board 18. As described above, the tray 12 is provided with the printed board and the like. The printed board and the like and the circuit board 18 are electrically connected. Since the tray 12 is movable in the direction depicted by the double-headed arrow A-B as described above, the printed board and the like and the circuit board 18 are connected by the use of a flexible board 19.

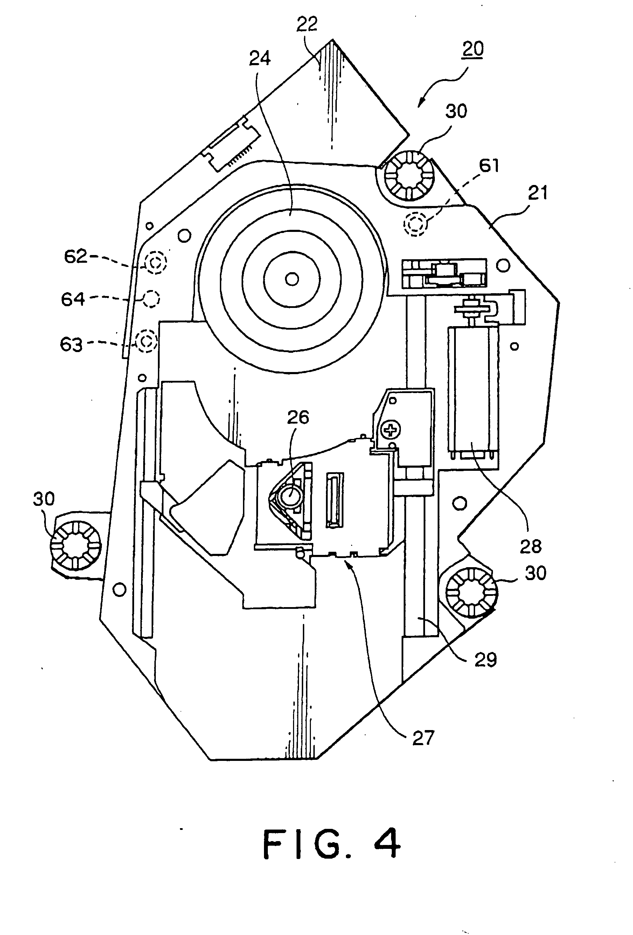

Referring to Figs. 2 through 4 in addition to Figs. 1A through 1C, description will be made of the driving unit 20 in detail. In Fig. 2, the upper plate 15 is fastened to the driving unit 20 by a plurality of screws. In Fig. 3, the driving unit 20 is seen from the lower side. In Fig. 4, the upper plate 15 is removed from the driving unit 20.

As generally illustrated in Figs. 2 through 4, the driving unit 20 has a structure in which a motor-chassis assembly for rotating the optical disc, the optical pickup 27 having a converging objective lens 26, and a pickup position control unit for moving the optical pickup 27 in a particular direction (i.e., a direction depicted by a double-headed arrow C-D in Fig. 2) are mounted to a sled chassis 21 from its lower side.

Specifically, the motor-chassis assembly comprises a motor chassis 22, a spindle motor 23, and a turntable 24. The spindle motor 23 is attached to the upper surface of the motor chassis 22. The spindle motor 23 has a shaft over which the turntable 24 is fitted from the upper side of the motor chassis 22.

In the first embodiment, the turntable 24 has a protruding portion to be fitted to a center hole of the optical disc. For example, the protruding portion is depicted by a third circle counted from a smallest circle at the center of the turntable 24. Furthermore, the motor chassis 22 is provided with a printed board (not shown) mounted on its upper surface. As will later be described, the motor-chassis assembly is fixed to the sled chassis 21 by the use of first, second, and third screws 41, 42, and 43.

The optical pickup position control unit comprises a sled motor 28, a threaded lead screw 29, a plurality of gears (not shown), and a guide rod (not shown).

The gears serve to transmit the rotation of the sled motor 28 to the lead screw 29. The guide rod serves to guide the optical pickup 27 together with the lead screw 29 when the optical pickup 27 moves in the radial direction of the optical disc in response to the rotation of the lead screw 29.

The sled chassis 21 has three tab portions provided with anti-vibration members 30, respectively. The driving unit 20 with the anti-vibration members 30 fitted to the tab portions of the sled chassis 21 is assembled to the tray 12 on the lower side thereof. In this state, the lower plate 13 is attached to cover the driving unit 20 on the lower side of the tray 12 and is fixed to the tray 12 together with the driving unit 20 by the use of screws

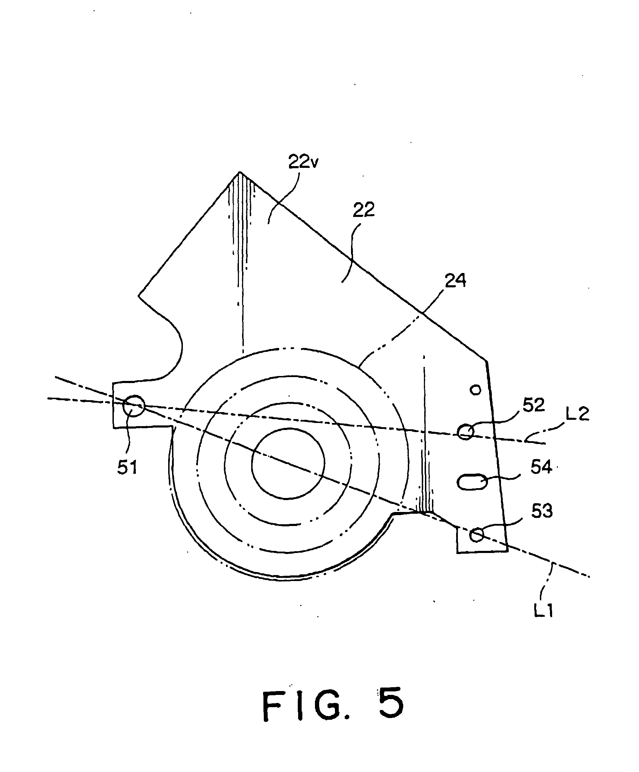

Next referring to Figs. 5 through 10 in addition, description will be made in detail about positioning and fixing of the motor-chassis assembly comprising the motor chassis 22, the spindle motor 23, and the turntable 24 to the sled chassis 21.

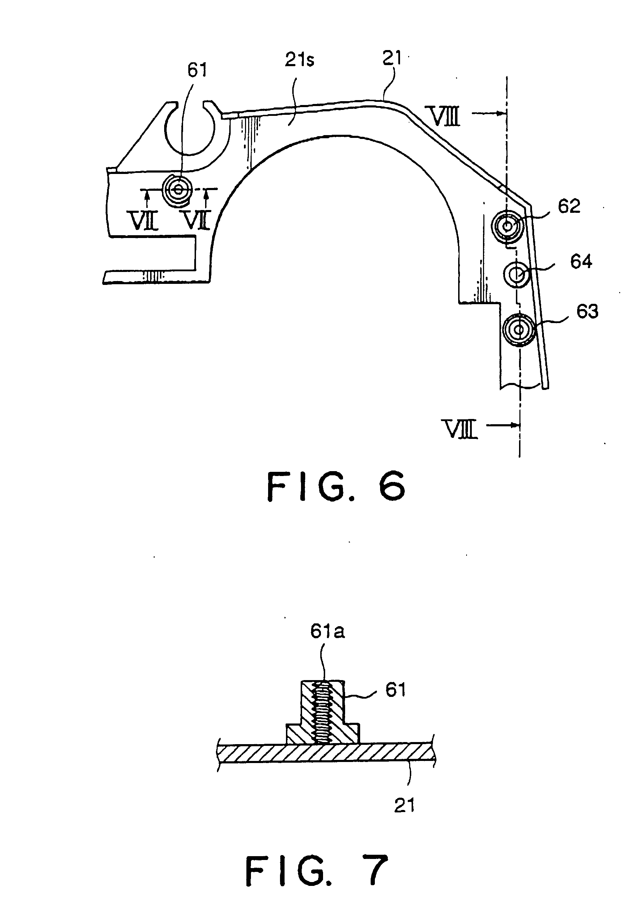

Referring to Figs. 5 and 6, the sled chassis 21 has a first principal surface 21s. The motor chassis 22 of the motor-chassis assembly has a second principal surface 22s facing the first principal surface 21s of the sled chassis 21. The positional relationship between the motor-chassis assembly and the sled chassis 21 is given by an angle of the second principal surface 22s of the motor chassis 22 with respect to the first principal surface 21s of the sled chassis 21.

The motor chassis 22 has a third principal surface 22v opposite to the second principal surface 22s. The motor chassis 22 is provided with first through fourth holes 51 through 54 penetrating therethrough from the second principal surface 22s to the third principal surface 22v. Among these holes, the first through the third holes 51 through 53 correspond to the first through the third screws 41 through 43 (see Fig. 3) as fastening means fastening the motor-chassis assembly to the sled chassis 21. Each of the first through the third holes 51 through 53 has a circular shape. The first hole 51 is greater in diameter than the second and the third holes 52 and 53. The second hole 52 is greater in diameter than the third hole 53.

The first and the third holes 51 and 53 are formed on a first imaginary line L1 (Fig. 5) passing through the center axis of the spindle motor 23, i.e., the center of the rotation shaft. It is noted here that the first imaginary line L1 connecting the first and the third holes 51 and 53 may be slightly deviated from the center axis of the spindle motor 23. In other words, the center of the turntable 24 may be located on a line parallel to the imaginary line L1 connecting the first and the third holes 51 and 53.

The first and the second holes 51 and 52 are formed on a second imaginary line L2 passing through a position slightly deviated from the first imaginary line L1 (passing through the center of the turntable 24) obliquely backward, i.e., in the direction D in Fig. 2. The first and the second imaginary lines L1 and L2 intersect with each other at the center of the first hole 51. Specifically, the second imaginary line L2 connecting the first and the second holes 51 and 52 is selected so as to divide a diameter of the turntable 24 in the direction C-D in Fig. 2 at a ratio of 2 : 5 to 3 : 4. The first imaginary line L1 connecting the first and the third holes 51 and 53 and the second imaginary line L2 connecting the first and the second holes 51 and 52 extend across the turntable 24 while an imaginary line connecting the second and the third holes 52 and 53 is present outside the turntable 24 and does not run across the turntable 24.

On the imaginary line connecting the second and the third holes 52 and 53, the fourth hole 54 is formed at a position corresponding to a positioning boss which will later be described. The fourth hole 54 is located between the second and the third holes 52 and 53 at an approximately middle point and has a generally elliptical shape or a shape like a running track. The fourth hole 54 is formed so that its long axis is substantially perpendicular to the imaginary line connecting the second and the third holes 52 and 53. The fourth hole 54 is greater in area than the second and the third holes 52 and 53.

As will later be described, the positional relationship among the first through the third holes 51 through 53 coincides with those among corresponding bosses and among the first through the third screws 41 through 43. With this structure, the first through the third holes 51 through 53 serves to adjust the angle of the motor-chassis assembly with respect to the sled chassis 21.

Referring to Fig. 6, the sled chassis 21 is provided with first through third bosses 61 through 63 formed at positions corresponding to the first through the third holes 51 through 53 to serve as fixing means. The first through the third bosses 61 through 63 protrude from the first principal surface 21s of the sled chassis 21 towards the second principal surface 22s of the motor chassis 22. Furthermore, the sled chassis 21 is provided with a fourth boss 64 as the positioning boss formed at a position corresponding to the fourth hole 54. At a position between the second and the third bosses 62 and 63, the fourth boss 64 protrudes from the first principal surface 21s of the sled chassis 21 towards the second principal surface 22s of the motor chassis 22.

A combination of the fourth boss 64 and the fourth hole 54 contributes to positioning of the motor-chassis assembly with respect to the sled chassis 21 in cooperation with a combination of the first boss 61 and the first hole 51 corresponding thereto.

On the other hand, a combination of the second and the third bosses 62 and 63 and the second and the third holes 52 and 53 corresponding thereto contributes to adjustment of an angle of the motor chassis 22 with respect to the sled chassis 21, i.e., adjustment of the position of the motor chassis 22 in the height direction.

In the first embodiment, each of the first through the fourth bosses 61 through 64 generally has a shape such that two cylinders different in diameter are stacked in an axial direction, i.e., has an upper small-diameter part and a lower large-diameter part.

Referring to Fig. 7, the first boss 61 formed at the position corresponding to the first hole 51 has an axial bore penetrating therethrough in the axial direction and provided with a female thread 61 a formed on an inside wall surface defining the bore. The female thread 61 a of the first boss 61 is engaged with the first screw 41 (see Fig. 3) inserted into the first hole 51 on the side opposite to the first boss 61, i.e., on the side of the third principal surface 22v. The first boss 61 serves to position the motor-chassis assembly with respect to the sled chassis 21 in cooperation with the first screw 41 inserted into the first hole 51 and to fix the motor-chassis assembly to the sled chassis 21.

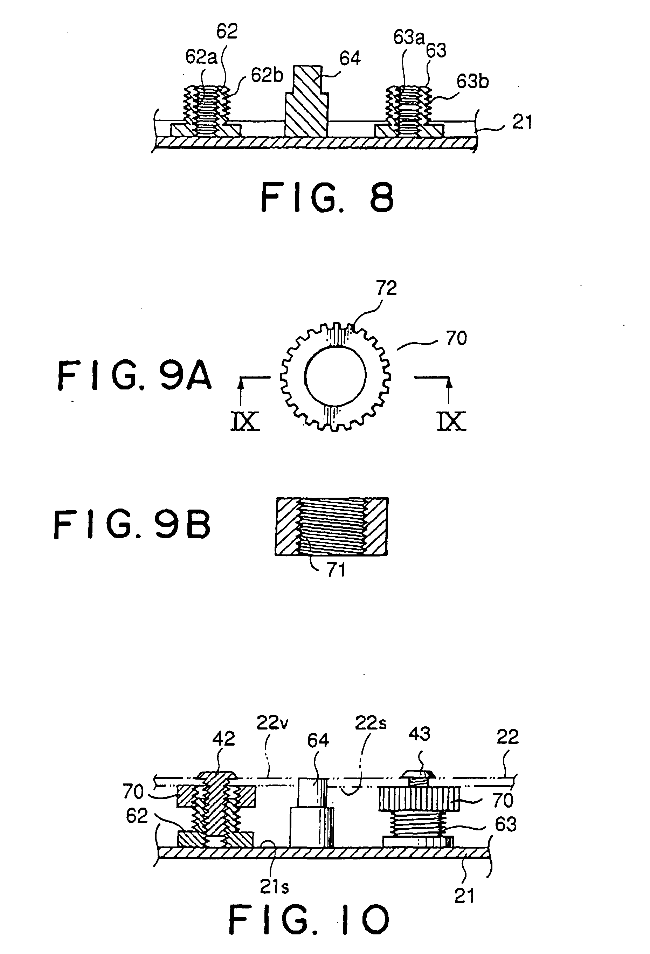

Referring to Fig. 8, the second and the third bosses 62 and 63 formed at the positions corresponding to the second and the third holes 52 and 53 have a generally cylindrical shape and have axial bores penetrating therethrough and provided with female threads 62a and 63a formed on inside wall surfaces defining the axial bores, respectively. Furthermore, the second and the third bosses 62 and 63 are provided with male threads 62b and 63b formed on outer peripheral surfaces thereof, respectively.

The female threads 62a and 63a of the second and the third bosses 62 and 63 are engaged with the second and the third screws 42 and 43 inserted into the second and the third holes 52 and 53 on the side opposite to the second and the third bosses 62 and 63, i.e., on the side of the third principal surface 22v. However, the second and the third bosses 62 and 63 have a function different from that of the first boss 61, i.e., an angle adjusting function. Specifically, in this embodiment, each of the male threads 62b and 63b of the second and the third bosses 62 and 63 is formed only in the upper small-diameter part thereof. Referring to Figs. 9A and 9B, two spacers 70 are fitted over the male threads 62b and 63b of the second and the third bosses 62 and 63, respectively. In cooperation with the second and the third screws 42 and 43 corresponding to the second and the third bosses 62 and 63, the spacers 70 clamp the motor chassis 22. Thus, the male threads 62b and 63b of the second and the third bosses 62 and 63 and the spacers 70 serve as angle adjusting means to form an angle adjusting mechanism in combination.

In this embodiment, each of the spacers 70 is provided with a female thread 71 formed inside and a gear formed on an outer peripheral surface 72 thereof. The spacers 70 are attached to both of the second and the third bosses 62 and 63, respectively. Thus, the two spacers 70 are used in this embodiment.

Referring to Fig. 10, each of the spacers 70 is moved in the height direction along the third bosses 63 by rotating the gear on the outer peripheral surface 72. At this time, the depth of engagement between the female threads 71 of the spacers 70 and the male threads 62b and 63b of the second and the third bosses 62 and 63 varies in the height direction. Thus, the spacers 70 has a position adjustable in the height direction. Upper surfaces of the spacers 70 define a mounting plane for the motor chassis 22 in cooperation with the first boss 61. Thus, the mounting plane for the motor chassis 22 can be moved by adjusting the positions of the spacers 70 in the height direction.

The outer peripheral surface 72 of each spacer 70 may have a simple cylindrical shape or a hexagonal shape and may be subjected to knurling as far as the spacer 70 can be easily rotated and adjusted in position.

As described above, the fourth boss 64 formed at the position corresponding to the fourth hole 54 is used as positioning means. As seen from Figs. 8 and 10, the fourth boss 64 has no female thread and no male thread. Thus, the fourth boss 64 is simply inserted into the fourth hole 54.

The fourth boss 64 is inserted into the fourth hole 54. By rotating the spacers 70 around the second and the third bosses 62 and 63, height or level adjustment of the spacers 70 is carried out In this event, the position of the motor chassis 22 is fixed in a plane parallel to the first principal surface 21a of the sled chassis 21 by the first boss 61 and the first screw 41 to prevent the displacement following the level adjustment.

It is noted here that, if the fourth hole 54 and the fourth boss 64 are tightly fitted to each other without any gap, the inclination of the motor chassis 21 is inevitably changed as a result of the height adjustment of the spacers 70 attached to the second and the third bosses 62 and 63. In this case, the motor chassis 22 or the sled chassis 21 are subjected to undesired shearing force. Taking this into consideration, the fourth hole 54 is formed to have a size greater than the outer dimension of the fourth boss 64 in a direction perpendicular to the direction C-D in Fig. 2. Thus, the fourth hole 54 provides the freedom in position of the fourth boss 64 within the fourth hole 54.

In the disc drive 10 having the above-mentioned structure, the mounting plane of the motor chassis 22 can be changed by adjusting the heights of the spacers 70. Thus, the positional relationship between the spindle motor 23 and the sled chassis 21 can be adjusted. Furthermore, it is possible to adjust the positional relationship between the optical disc rotated by the spindle motor 23 and the optical pickup 27 (particularly, the objective lens 26) mounted to the sled chassis 21.

In the first embodiment mentioned above, the first through the third bosses 61 through 63 corresponding to the first through the third screws 41, 42, and 43 are different in function. The first boss 61 is used for positioning and fixing while the second and the third bosses 62 and 63 are used for angle adjustment. Alternatively, two of the first through the third bosses 61 through 63 may be used for positioning and fixing while the remaining one is used for angle adjustment. Further alternatively, all of the three bosses may be used for angle adjustment. For example, all of the first through the third bosses 61 through 63 are used for angle adjustment while the three spacers 70 are adapted to perform position adjustment of the mounting plane of the motor chassis 22. With this structure, it is possible to adjust not only the angle of the motor chassis 22 with respect to the sled chassis 21 but also the distance between the motor chassis 22 and the sled chassis 21. As a consequence, the distance between the disc mounted on the turntable 24 and the sled chassis 21 can be changed.

Thus, in the disc drive according to the first embodiment, it is possible to adjust a working distance (WD) which is a distance between a lens surface of the optical pickup 27 and the optical disc.

In the disc drive according to the first embodiment, the motor chassis 22 is fixed to the sled chassis 21 by the use of the three screws in view of three-point fixation. However, the number of the screws is not restricted to three as far as the motor chassis 22 is appropriately fixed to the sled chassis 21. It will readily be understood that, if the number of the screws is changed, the number of bosses is changed correspondingly. Even if the number of the bosses is changed, the relationship between the numbers of the positioning/fixing bosses and the angle adjustment bosses is not restricted at all in the manner similar to that mentioned above.

As described above, according to the first embodiment, the mounting plane of the motor chassis 22 can be changed through the height adjustment by the spacers 70 to thereby adjust the positional relationship between the spindle motor 23 and the sled chassis 21. Furthermore, the positional relationship between the optical disc rotated by the spindle motor 23 and the optical pickup 27 (particularly, the objective lens 26) mounted on the sled chassis 21 can be adjusted. Furthermore, the disc drive in simple in structure and does not require a large space.

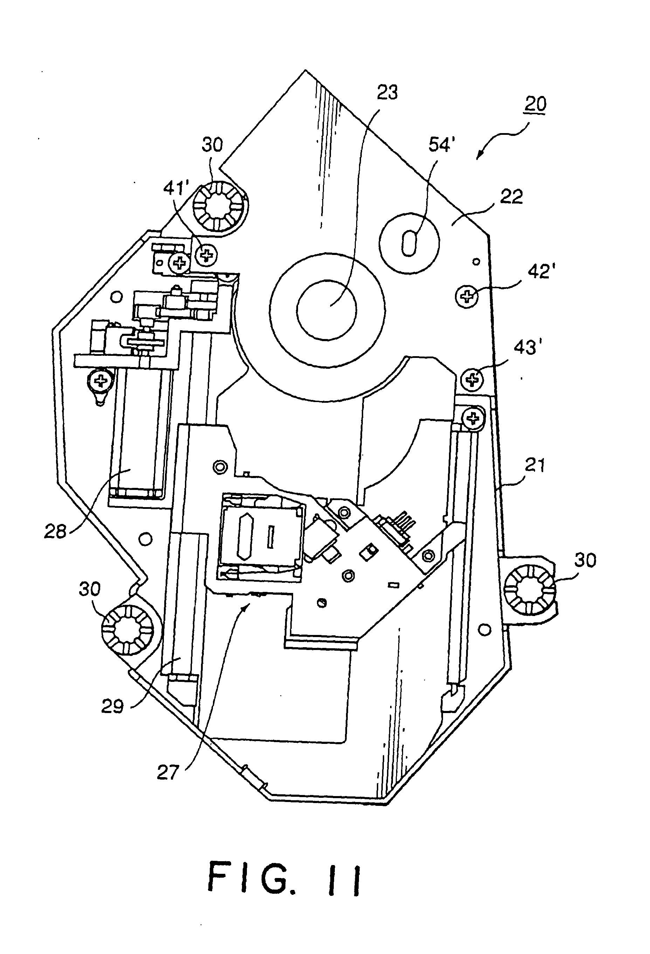

Referring to Figs. 11 through 17, description will be made of a disc drive according to a second embodiment of this invention. The disc drive in the second embodiment is similar to the first embodiment except that the sled chassis 21 and the motor chassis 22 are partially modified. Therefore, similar parts are designated by like reference numerals and description thereof will be omitted.

At first referring to Fig. 11, the driving unit 20 (Fig. 2) is seen from the lower side. The motor-chassis assembly comprises the motor chassis 22, the spindle motor 23 attached to the upper side of the motor chassis 22, and the turntable 24 fitted over the shaft of the spindle motor 23 from the upper side of the motor chassis 22.

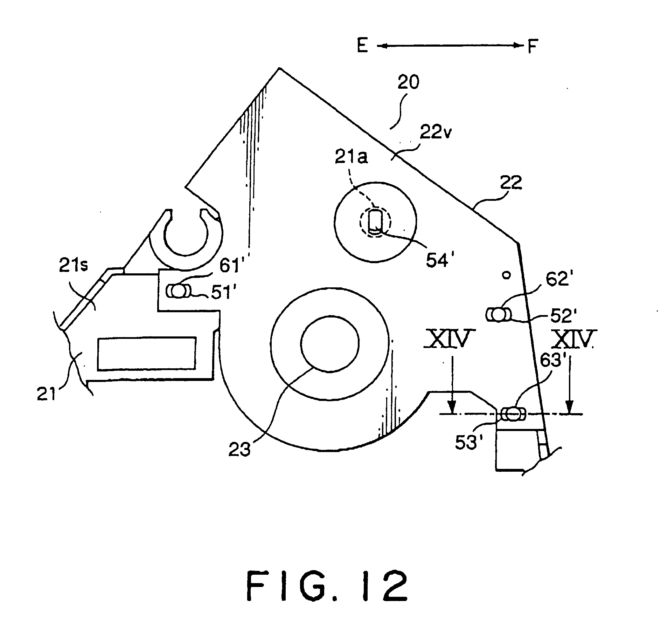

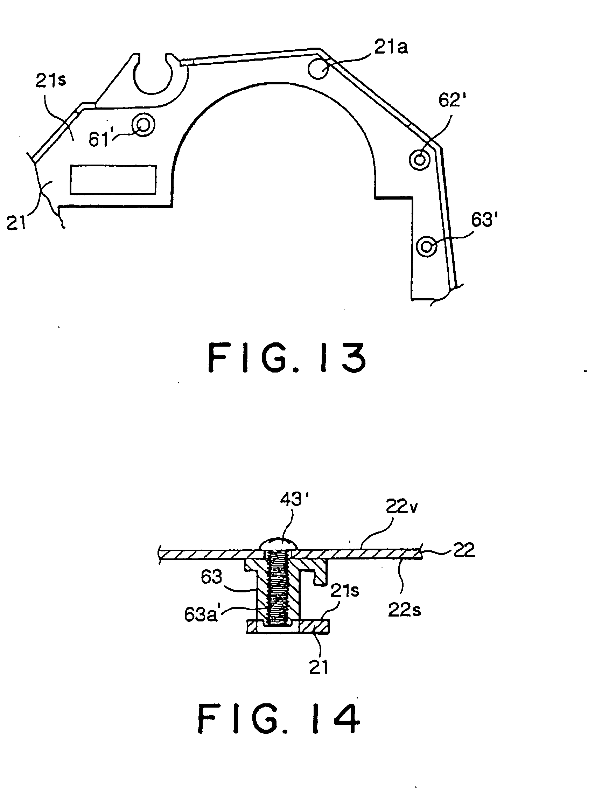

Referring to Figs. 12 and 13 in addition, description will be made in detail about the positioning and fixing of the motor-chassis assembly with respect to the sled chassis 21.

In Fig. 12, the motor-chassis assembly comprising the motor chassis 22, the spindle motor 23, and the turntable 24 is seen from the lower side. The motor chassis 22 is provided with four holes including first through third holes 51' through 53' and a fourth hole (additional hole) 54'. The first through the third holes 51' through 53' correspond to first through third screws 41', 42', and 43' for positioning and fixing the motor-chassis assembly to the sled chassis 21 (see Fig. 11). Each of the first through the third holes 51' through 53' is a long hole elongated in an off-center direction (depicted by a double-headed arrow E-F in Fig. 12) in which a positioning error from the spindle motor 23 or the center of the turntable 24 is corrected. In the illustrated example, the first through the third holes 51' through 53' are long holes identical in shape and size. At any rate, each of the first through the third holes 51' through 53' has a generally elliptical shape or a shape like a running track.

In the second embodiment, the positional relationship between the first and the third holes 51' and 53' of the motor chassis 22 is similar to that between the first and the third holes 51 and 53 formed on the first imaginary line L1 passing through the center of the turntable 24 illustrated in Fig. 5.

The relationship between the first and the second holes 51' and 52' is similar to that between the first and the second holes 51 and 52 formed on the second imaginary line L2 deviated from the center of the turntable 24 illustrated in Fig. 5.

Furthermore, the motor chassis 22 is provided with the fourth hole 54' formed at a position spaced from the center of the turntable 24 in the radial direction on an upper side of the second imaginary line L2 (see Fig. 5) connecting the first and the second holes 51' and 52'. The fourth hole 54' serves to adjust the position in the off-center direction E-F. The fourth hole 54' has a generally elliptical shape or a shape like a running track. The first through the third holes 51' through 53' are elongated in the off-center direction E-F as described above while the fourth hole 54' is elongated in a direction perpendicular to the off-center direction E-F.

Referring to Figs. 12 and 13, the sled chassis 21 is provided with first through third bosses 61' through 63' formed at positions corresponding to the first through the third holes 51' through 53'. In the second embodiment, each of the first through the third bosses 61' through 63' has a generally cylindrical shape. Since the first through the third bosses 61' through 63' has a same shape, the third boss 63' alone is illustrated in Fig. 14. The third boss 63' is provided with a female thread 63a'.

The female threads 61 a' through 63a' of the first through the third bosses 61' through 63' are engaged with the first through the third screws 41' through 43' inserted into the first through the third holes 51' through 53' of the motor chassis 22 from the side opposite to the first through the third bosses 61' through 63'. Thus, a combination of the first through the third bosses 61' through 63' and the first through the third screws 41' through 43' serves to position the motor-chassis assembly with respect to the sled chassis 21 and to fix the motor-chassis assembly to the sled chassis 21.

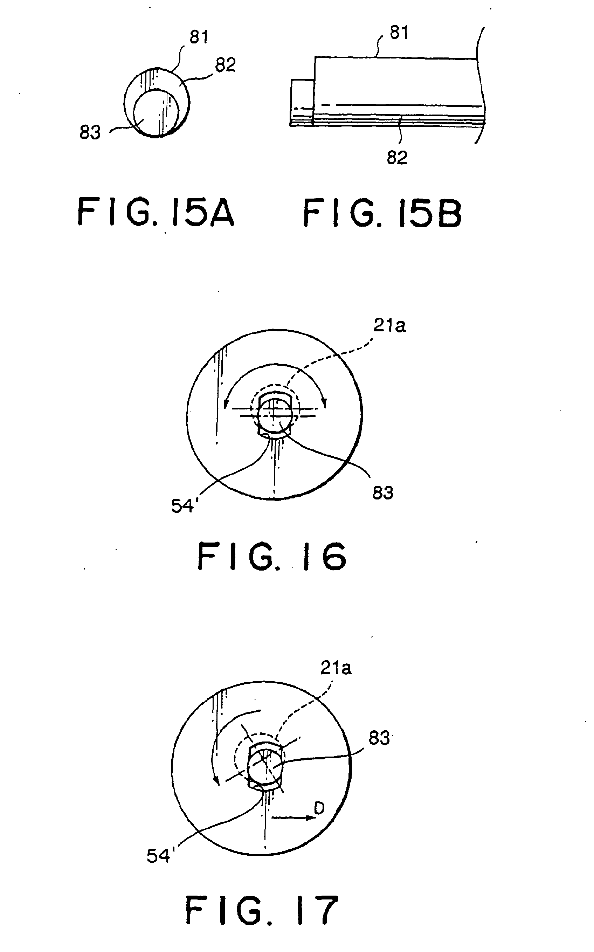

Furthermore, the sled chassis 21 is provided with a circular adjusting hole 21 a formed at a position corresponding to the fourth hole 54'. The adjusting hole 21a of the sled chassis 21 and the fourth hole 54' of the motor chassis 22 are adjusted in position by an eccentric driver 81 illustrated in Figs. 15A and 15B in order to correct the positioning error of the spindle motor 23 in the off-center direction as described above. Thus, the sled chassis 21 and the motor-chassis assembly have an off-center adjusting mechanism formed by the adjusting hole 21a and the fourth hole 54 as the adjusting means.

As illustrated in Figs. 15A and 15B, the eccentric driver 81 has a cylindrical portion 82 elongated in an axial direction thereof and a cylindrical eccentric pin 83 formed on one end face of the cylindrical portion 82 in the axial direction. The eccentric pin 83 has a center axis shifted in position from that of the cylindrical portion 82 and is therefore eccentric.

Referring to Figs. 16 and 17, the eccentric pin 83 is inserted into the adjusting hole 21 a from the back side of the drawing sheet. The eccentric driver 81 is rotatable in clockwise and counterclockwise directions in the plane of the drawing sheet. For example, if the eccentric driver 81 is rotated in the counterclockwise direction as illustrated in Fig. 17, the motor chassis 22 can be moved in the off-center direction D.

In the disc drive 10 having the above-mentioned structure, the mounting plane of the motor chassis 22 can be changed in the off-center direction E-F by the adjustment using the eccentric driver 81. By this adjustment, the positional relationship between the spindle motor 23 and the sled chassis 21 as well as the positional relationship between the optical disc rotated by the spindle motor 23 and the optical pickup 27 (particularly, the objective lens 26) mounted to the sled chassis 21 can be adjusted.

In the second embodiment, the motor chassis 22 is positioned and fixed with respect to the sled chassis 21 by the first through the third screws 41' through 43'. It is noted here that the number of the screws is not restricted to three as far as the motor chassis 22 can appropriately be fixed to the sled chassis 21. It will readily be understood that, if the number of the screws is changed, the number of the bosses is changed correspondingly.

As described above, according to the second embodiment, the mounting plane of the motor chassis 22 can be changed by adjusting the positioning error in the off-center direction E-F by operating the off-center adjusting mechanism using the eccentric driver 81. In this manner, the positional relationship between the spindle motor 23 and the sled chassis 21 as well as the relationship between the optical disc rotated by the spindle motor 23 and the optical pickup 27 (particularly, the objective lens 26) mounted to the sled chassis 21 can be adjusted with high accuracy. Furthermore, the disc drive is simple in structure and does not require a large space.

While this invention has thus far been described in conjunction with a few preferred embodiments thereof, it will now readily be understood for those skilled in the art to modify this invention in various other manners. For example, an optical axis adjusting mechanism for adjusting an optical axis of the optical pickup 27 may be provided in addition to the mechanism for adjusting the fixing position or the height on the side of the motor-chassis assembly including spindle motor 23.

Each feature disclosed in this specification (which term includes the claims) and/or shown in the drawings may be incorporated in the invention independently of other disclosed and/or illustrated features.

The text of the abstract filed herewith is repeated here as part of the specification.

A disc drive is provided with a sled chassis and a motor-chassis assembly fixed to the sled chassis. The motor-chassis assembly is provided with a motor chassis on which a turntable and a spindle motor are supported to rotate an optical disc. The motor-chassis assembly is fixed to the sled chassis by fixing means, that is designed so that the positional relationship therebetween is adjustable. As a consequence, the optical disc and an optical pickup can also be adjusted in relative position. It is preferable that the positional relationship is adjusted in a height direction or in an off-center direction.

## Claims

1. A disc drive comprising a motor-chassis assembly in which a turntable and a spindle motor are held on a motor chassis to rotate a disc, a sled chassis, and fixing means fixing said motor-chassis assembly to said sled chassis, **characterized in that** said fixing means is designed so that the positional relationship between the assembly and the sled chassis is adjustable.

2. A disc drive as claimed in claim 1, wherein said sled chassis has a first principal surface, said motor chassis having a second principal surface facing the first principal surface, the positional relationship being given by an angle of said second principal surface with respect to the first principal surface.

3. A disc drive as claimed in claim 2, wherein said motor chassis has a third principal surface opposite to said second principal surface and is provided with a plurality of holes penetrating therethrough from said second principal surface to said third principal surface;
said fixing means comprising:
a plurality of bosses formed at positions corresponding to said holes and protruding from said sled chassis towards said second principal surface of said motor chassis, said bosses being provided with a plurality of female threads, respectively; and
a plurality of screws engaged with said female threads from the side of said third principal surface of said motor chassis, respectively.

4. A disc drive as claimed in claim 3, wherein said bosses include one or more specific bosses, each of said specific bosses having an angle adjusting mechanism for adjusting the angle of said second principal surface with respect to said first principal surface, said angle adjusting mechanism comprising angle adjusting means for adjusting the angle by moving said second principal surface with respect to said first principal surface.

5. A disc drive as claimed in claim 4, wherein said angle adjusting means comprises a male thread formed on an outer peripheral surface of each of said specific bosses and a spacer provided with a female thread corresponding to said male thread;
said spacer being rotatably engaged with said male thread, said spacer and each of said specific bosses clamping said motor chassis in co-operation with a screw corresponding to each said specific boss.

6. A disc drive as claimed in claim 5, wherein the number of said bosses is equal to three.

7. A disc drive as claimed in claim 5, wherein the number of said specific bosses is equal to two.

8. A disc drive as claimed in claim 5, wherein said sled chassis has an additional boss formed at a position between said specific bosses and protruding from said first principal surface towards said second principal surface of said motor chassis;
said motor chassis having an additional hole formed at a position corresponding to said additional boss;
a combination of said additional boss and said additional hole contributing to positioning of said motor-chassis assembly with respect to said sled chassis in co-operation with a combination of a remaining boss that is not one of the specific bosses, and said hole corresponding to the remaining boss;
a combination of said specific bosses and said holes corresponding to said specific bosses contributing to angle adjustment.

9. A disc drive as claimed in claim 8, wherein said remaining boss hole and said additional hole corresponding to said remaining and additional bosses, respectively, are greater in dimension than said bosses corresponding thereto.

10. A disc drive as claimed in claim 1, wherein said sled chassis has a first principal surface, said motor chassis having a second principal surface facing the first principal surface, the positional relationship being given by a position of said second principal surface with respect to the center of said first principal surface in an off-center direction.

11. A disc drive as claimed in claim 10, wherein said fixing means is adapted to fix the positional relationship in a direction perpendicular to said off-center direction.

12. A disc drive as claimed in claim 11, wherein said motor chassis has a third principal surface opposite to said second principal surface and a plurality of holes penetrating through said motor chassis from said second principal surface to said third principal surface, said holes having a size elongated in said off-center direction;
said fixing means comprising:
a plurality of bosses formed at positions corresponding to said holes and protruding from said sled chassis towards said second principal surface of said motor chassis, said bosses being provided with female threads formed inside, respectively; and
a plurality of screws engaged with said female threads from the side of said third principal surface of said motor chassis respectively.

13. A disc drive as claimed in claim 12, wherein the number of said holes is equal to three.

14. A disc drive as claimed in claim 12, further comprising an off-center adjusting mechanism for correcting a positioning error of said second principal surface with respect to said first principal surface in said off-center direction, said off-center adjusting mechanism comprising adjusting means for adjusting the positioning error by moving said motor chassis with respect to said sled chassis.

15. A disc drive as claimed in claim 14, wherein said adjusting means comprises an additional hole penetrating through said, motor chassis from said second principal surface to said third principal surface and elongated in size in a direction perpendicular to said off-center direction, and an adjusting hole formed in said sled chassis at a position corresponding to said additional hole so that the adjustment in said off-center direction is carried out by inserting an eccentric pin of an eccentric jig into said additional hole and rotating said eccentric jig to move said motor chassis.

16. A disc drive as claimed in claim 15, wherein a single pair of said additional hole and said adjusting hole is provided.
